# EUROPÄISCHE PATENTSCHRIFT

(11) **EP 2 769 110 B1**
(45) Veröffentlichungstag und Bekanntmachung des Hinweises auf die Patenterteilung: **09.08.2017**
(21) Anmeldenummer: 12759112.1
(22) Anmeldetag: 13.09.2012
(51) Int. Cl.: F16D 25/04, F16D 25/10, F16K 31/04, F16K 31/50, H02K 11/00

(54) **BETÄTIGUNGSEINRICHTUNG ZUM BETÄTIGEN VON SCHALTELEMENTEN**
ACTUATION DEVICE FOR ACTUATING SWITCHING ELEMENTS
DISPOSITIF D'ACTIONNEMENT POUR ACTIONNER DES ÉLÉMENTS DE COMMUTATION

(30) Priorität: 17.10.2011 DE 102011084583
(43) Veröffentlichungstag der Anmeldung: 27.08.2014
(73) Patentinhaber: ZF Friedrichshafen AG, 88046 Friedrichshafen (DE)
(72) Erfinder: REISCH, Matthias, 88214 Ravensburg (DE); DREIBHOLZ, Ralf, 88074 Meckenbeuren (DE)
(86) Internationale Anmeldenummer: PCT/EP2012/067912
(87) Internationale Veröffentlichungsnummer: WO 2013/056904

(56) Entgegenhaltungen:
- EP-A1- 0 493 992
- WO-A1-2005/064763
- DE-A1- 2 358 406
- DE-A1- 10 205 411
- DE-U1- 29 816 447

## Beschreibung

Die Erfindung betrifft eine Betätigungseinrichtung zum Betätigen von zumindest einem über eine Schalteinrichtung schaltbaren Schaltelement nach dem Oberbegriff des Patentanspruches 1 sowie die Verwendung der Betätigungseinrichtung.

Bei heutigen Kraftfahrzeuggetrieben, insbesondere Automatgetrieben werden die Gänge durch Schaltelemente, d. h. Kupplungen oder Bremsen, ausgebildet als Lamellenschaltelemente oder Klauenschaltelemente, geschaltet. Die Schaltung erfolgt in der Regel hydraulisch, d. h. über Schalteinrichtungen in Form von Kolben/ Zylinder-Einheiten, welche mit Drucköl beaufschlagt werden. Das Drucköl wird von einer Pumpe gefördert und über Ölzuführungen vom Getriebegehäuse über so genannte Drehölzuführungen, in die rotierende Getriebewelle und von dieser zu den Schalteinrichtungen geführt. Durch den Hydraulikkreislauf, d. h. die Leistung der Getriebeölpumpe, Dichtstellen, Druckabfall in den Zuführleitungen und Leckage entstehen Verluste, die den Getriebewirkungsgrad belasten. Das Problem dieser Erfindung besteht darin, die durch den Hydraulikkreislauf, insbesondere durch die Schaltung verursachte Verluste möglichst gering zu halten, um dadurch einen möglichst hohen Getriebewirkungsgrad zu erzielen. Ein besonderes Problem besteht darin, dass der Öldruck in einem Hydraulikzylinder bei einem geschlossenen Schaltelement, der so genannte Schließdruck, laufend nachgeführt, d. h. aufrecht erhalten werden muss, um das erforderliche Drehmoment in dem Schaltelement übertragen zu können. Dieser Druck muss von der Hydraulikpumpe, die vom Motor des Kraftfahrzeuges angetrieben wird, aufgebracht werden, wodurch Verluste verursacht werden.

Durch die DE 102 05 411 A1 der Anmelderin wurde ein hydraulisch schaltbares Lamellenschaltelement bekannt, welches in geschlossenem Zustand, d. h. bei Drehmomentübertragung mechanisch durch eine Sperreinrichtung verriegelt wird. Dadurch wird die Anpresskraft zwischen den Lamellen aufrechterhalten, ohne dass ein hydraulischer Druck wirken muss - die Getriebeölpumpe wird dadurch entlastet. In einer nicht dargestellten Variante ist die Sperreinrichtung als Absperrventil ausgebildet, welches im Zuführbereich des Hydraulikzylinders angeordnet ist. Damit wird der Druckraum des Zylinders zur Pumpe hin abgesperrt und der zur Aufrechterhaltung des Anpressdruckes im Lamellenpaket erforderliche Druck aufrechterhalten. Somit ist auch bei dieser Variante die Getriebeölpumpe bei geschlossenem Schaltelement entlastet.

Durch die DE 10 2006 049 283 A1 der Anmelderin wurde eine Synchronisierung für ein Schaltgetriebe bekannt, wobei ein Losrad über einen in einer Getriebewelle angeordneten Aktor, ausgebildet als Zylinder/ Kolben-Einheit, schaltbar ist. Der Zylinder des Aktors weist zwei Druckmittelleitungen auf, in welchen Absperrventile angeordnet sind, durch welche der im Zylinder herrschende Druck aufrechterhalten werden kann, ohne dass die Pumpe Leistung aufnehmen muss.

In einer weiteren Veröffentlichung AT 005 220 U1 ist eine hydraulische Kupplung beschrieben, welche einen Ventilkörper mit einem Steuerglied bzw. Steuerstift enthält. Der Steuerstift wird mechanisch mittels einer Druckfeder zum Schliessen einer Einlassöffnung und mittels eines Aktors bspw. eines Schrittmotors zum Öffnen betätigt. Alternativ ist eine magnetische Betätigung des Ventils vorgeschlagen, wobei das Steuerventil als Proportionalventilventil ausgebildet ist.

Ausgehend von diesem Stand der Technik, besteht die Aufgabe der Erfindung darin, eine Betätigungseinrichtung der eingangs genannten Art mit möglichst geringen Verlusten zu schaffen und die Betätigungseinrichtung besonders kompakt zu bauen und den erforderlichen Bauraum zu reduzieren und die Montage der Betätigungseinrichtung zu vereinfachen, insbesondere bei Verwendung in Getrieben.

Die Aufgabe der Erfindung wird durch die unabhängigen Patentansprüche 1 und 19 gelöst. Vorteilhafte Ausgestaltungen ergeben sich aus den Unteransprüchen.

Erfindungsgemäß ist das Absperrventil, welches den Schließdruck im Druckraum der Schalteinrichtung aufrechterhält, drehfest mit mindestens einem Schaltelement verbundenen und elektrisch ansteuerbar, wobei die elektrische Energie berührungslos zuführbar ist. Die berührungslose Energieübertragung erfolgt vorzugsweise auf induktiver Basis, wobei eine ortsfeste Primärspule und eine mitrotierende Sekundärspule vorgesehen sein können. Damit werden Steckverbindungen und mechanische Reibungsverluste für die Energiezufuhr vermieden.

Erfindungsgemäss ist ausserdem das mindestens eine Schaltelement mit einem elektronischen Steuergerät, auch Elektronikmodul genannt, verbunden und das mindestens eine Schaltelement und das elektronische Steuergerät sind mittels eines Funktionsträgers drehfest mit einer Getriebewelle verbunden.

In dem mitrotierenden Elektronikmodul sind elektronische Komponenten wie eine Sekundärspule zur berührungslosen Energieübertragung und auch Teile der Aktuatoren aufgenommen. Das Elektronikmodul stellt somit eine weitestgehend vormontierbare Einheit dar.

Nach einer bevorzugten Ausführungsform ist die Schalteinrichtung hydraulisch oder pneumatisch betätigbar, d. h nicht nur auf ein Druckmedium beschränkt.

Nach einer weiteren bevorzugten Ausführungsform ist die Schalteinrichtung als Faltenbalg ausgebildet ist, der mit einem Druckmedium befüllbar ist. Der Faltenbalg bildet einen geschlossenen Druckraum, bei welchem keine Dichtungen erforderlich sind. Daraus ergibt sich der Vorteil einer absoluten Dichtheit und durch den Fortfall von Dichtelementen ein Wirkungsgradgewinn. Der Schließdruck im Faltenbalg wird durch das Absperrventil aufrechterhalten.

Nach einer weiteren bevorzugten Ausführungsform ist die mindestens eine Schalteinrichtung als Kolben/ Zylinder-Einheit ausgebildet, welche von einem flüssigen oder gasförmigen Druckmedium beaufschlagt werden kann.

Nach einer weiteren bevorzugten Ausführungsform ist der Kolben als Ringkolben ausgebildet. Damit kann die von der Schalteinrichtung erzeugte Schaltkraft auf das das Schaltelement, z. B. eine Lamellenkupplung übertragen werden.

Nach einer weiteren bevorzugten Ausführungsform bildet das Absperrventil eine Komponente oder einen Teil eines Aktuators, welcher zusätzlich einen Elektromotor und eine Ventilspindel umfasst, welche ein mit einem Bewegungsgewinde versehendes Ventilschließglied bewegt. Durch den Spindel/ Mutter-Antrieb kann ein relativ hoher Schließdruck für das Absperrventil erreicht werden. Definitionsgemäß umfasst der Aktuator (auch Aktor genannt) einen Antriebsteil - hier den Elektromotor - und einen Ventilteil (Schließorgan) - hier das Ventilschließglied mit Ventilspindel.

Nach einer weiteren bevorzugten Ausführungsform ist das Absperrventil Teil eines Aktuators, welcher eine Magnetspule, einen Anker und einen Ventilstößel umfasst, welcher das Ventilschließglied betätigt. Diese Ausführungsform eines Aktuators arbeitet somit wie ein Magnetventil mit rein translatorischer Bewegung. Dadurch wird eine höhere Schließgeschwindigkeit bzw. eine höhere Ventildynamik bei geringeren Kosten erreicht.

Nach einer weiteren bevorzugten Ausführungsform ist mit dem mindestens einen Schaltelement ein Funktionsträger verbunden, in welchem bewegliche Teile des Aktuators aufgenommen und schwimmend in einer Hydraulikflüssigkeit angeordnet sind. Damit wird eine Fliehkraftkompensation erreicht: Die beweglichen Teile wie z. B. Ventilspindel, Ankerwelle und Ventilschließglied erfahren durch die Hydraulikflüssigkeit einen Auftrieb, welcher der Wirkrichtung der Fliehkraft entgegen gerichtet ist.

Nach einer weiteren bevorzugten Ausführungsform wird die mittlere Dichte der beweglichen Teile an die mittlere Dichte der Hydraulikflüssigkeit, vorzugsweise ein Hydraulik- oder Getriebeöl angenähert. Dies kann beispielsweise durch Hohlbauweise (Ankerhohlwelle) oder Leichtbauweise (Kunststoff- oder Leichtmetallwerkstoffe) erreicht werden.

Nach einer weiteren bevorzugten Ausführungsform ist im Kraftfluss zwischen Aktuator und Schaltelement ein Kraftspeicher vorgesehen, welcher die Funktion hat, eine nachlassende Schaltkraft zu kompensieren. Damit wird ein etwaiges Durchrutschen des Schaltelementes, z. B. einer Lamellenkupplung vermieden. Der Kraftspeicher kann als elastisches Glied, z. B. als Tellerfeder und/oder als elastischer Ringkolben ausgebildet sein.

Nach einer weiteren bevorzugten Ausführungsform wird dem Absperrventil Fluid über einen Drehübertrager zugeführt, d. h. eine Einrichtung zur Übergabe des Fluids von einem ortsfesten an ein rotierendes Bauteil. Vorteilhafterweise versorgt dabei ein einzelner Drehübertrager mehrere Absperrventile und diesen zugeordnete Schalteinrichtungen mit Fluid, wodurch die Anzahl der Reibungs- und Leckageverluste verursachenden Drehübertrager reduziert wird. Mehrere Schaltelemente können somit wahlweise mit nur einem Druckregelventil und nur einem Drehübertrager betätigt werden.

Nach einer weiteren bevorzugten Ausführungsform wird der Drehübertrager mit einem Druckniveau beaufschlagt, welches einem Schmierdruckniveau entspricht, beispielsweise mit einem Schmieröldruck von 0,3 bar. Damit wird erreicht, dass der Drehübertrager bei geschlossenem Druckregelventil, wenn also kein Druck am Drehübertrager anliegt, keine Luftblasen zieht. Luftblasen im Hydrauliksystem würden ein reproduzierbares Regelverhalten beeinträchtigen. Im Falle eines Getriebes steht ein Schmierdruckniveau ohnehin zur Verfügung.

Nach weiteren bevorzugten Ausführungsformen ist dem Elektronikmodul und der mindestens einen Schalteinrichtung eine berührungslose Wegmesseinrichtung mit einem Weggeber und einem Nehmer zugeordnet. Der Weggeber kann vorzugsweise an einem Ringkolben einer Schalteinrichtung, z. B. einer Lamellenkupplung angeordnet sein. Darüber hinaus können Druck- oder Kraftsensoren vorgesehen werden. Damit kann der jeweilige Betriebszustand des Schaltelementes (offen, geschlossen oder Zwischenstellungen) erfasst werden. Die Schaltqualität kann dadurch verbessert und ein schleichender Druckverlust in der Schalteinrichtung erkannt und nachgeführt werden, ohne dass dies zu einer Veränderung des Fahrverhaltens führt.

Nach einer weiteren bevorzugten Ausführungsform ist ein Druckspeicher vorgesehen, welcher von einer intermittierend laufenden Elektropumpe aufgefüllt wird. Dadurch können Hydraulikflüssigkeit auf konstantem Druckniveau bereitgestellt und die Antriebsleistung der Hydraulikpumpe verringert werden.

Nach einem weiteren Aspekt der Erfindung wird die oben beschriebene Betätigungseinrichtung vorteilhaft für Getriebe, insbesondere Automatgetriebe in Kraftfahrzeugen verwendet. Dadurch kann der Gesamtwirkungsgrad des Getriebes verbessert werden.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: einen Axialschnitt einer erfindungsgemäßen Betätigungseinrichtung mit Absperrventil und Schaltelementen für ein Getriebe,
- Fig. 2: ein Hydraulikschaltschema für die Betätigung von Schaltelementen,
- Fig. 3: ein Elektronikmodul zur Aufnahme von Aktuatoren,
- Fig. 4: einen Axialschnitt durch die Schaltelemente mit berührungsloser Wegmesseinrichtung und
- Fig. 5: eine als Faltenbalg ausgebildete Schalteinrichtung als weiteres Ausführungsbeispiel der Erfindung.

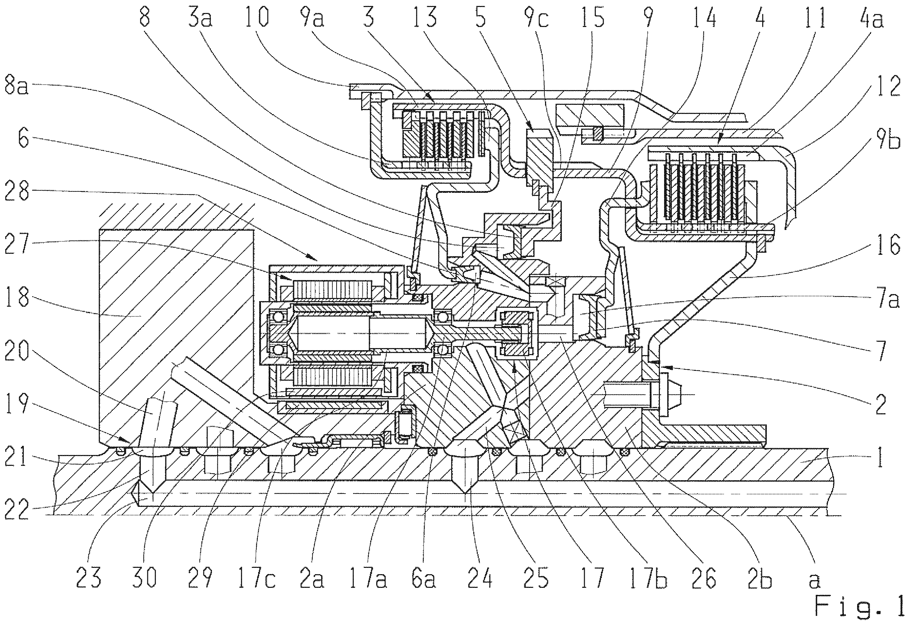

Fig. 1 zeigt eine erfindungsgemäße Betätigungseinrichtung für ein Automatgetriebe eines Kraftfahrzeuges mit einer Getriebewelle 1, auf welcher drehfest ein so genannter Funktionsträger 2 mit einer Rotationsachse a angeordnet ist. Mit dem Funktionsträger 2 sind insgesamt drei Schaltelemente verbunden, nämlich eine erste Lamellenkupplung 3, eine zweite Lamellenkupplung 4 sowie eine Klauenkupplung 5. Den Schaltelementen 3, 4, 5 sind hydraulisch betätigbare Schalteinrichtungen, ausgebildet als Kolben/ Zylinder-Einheiten 6, 7, 8 zugeordnet. Die Schalteinrichtungen 6, 7 weisen jeweils einen ringförmigen als Druckraum 6a, 7a ausgebildeten Ringzylinder auf, welche im Funktionsträger 2 angeordnet sind. Die Schaltelemente 3, 4, 5 sind antriebseitig durch einen gemeinsamen kombinierten Lamellen/Klauen-Träger 9 verbunden, der bezüglich der ersten Lamellenkupplung 9 als Außenlamellenträger 9a bezüglich der zweiten Lamellenkupplung 4 als Innenlamellenträger 9a und bezüglich der Klauenkupplung 5 als Klauenträger 9c ausgebildet ist. Die Abtriebsseite der ersten Lamellenkupplung 3 weist einen Innenlamellenträger 3a auf, der mit einem zylinderförmigen Abtriebsglied 10 verbunden ist. Die Klauenkupplung 5 ist mit einem weiteren zylinderförmigen Abtriebsglied 11 verbunden. Die zweite Lamellenkupplung 4 weist einen Außenlamellenträger 4a auf, welcher das dritte Abtriebsglied 12 bildet. Die erste Lamellenkupplung 3 wird über einen ersten Ringkolben 13, und die zweite Lamellenkupplung 4 wird über einen zweiten Ringkolben 14 betätigt, während die Klauenkupplung 5 über mehrere auf dem Umfang des Funktionsträgers 2 angeordnete Schaltarme 15 betätigt wird.

Der kombinierte Lamellen/ Klauen-Träger 9 ist mit dem Funktionsträger 2 über ein Verbindungselement 16 drehfest verbunden, sodass die Antriebsseiten der drei Schaltelemente 3, 4, 5 über den Funktionsträger 2 mit der Getriebewelle 1 verbunden sind. Der Funktionsträger 2 ist somit auch Träger der Schaltelemente 3, 4, 5.

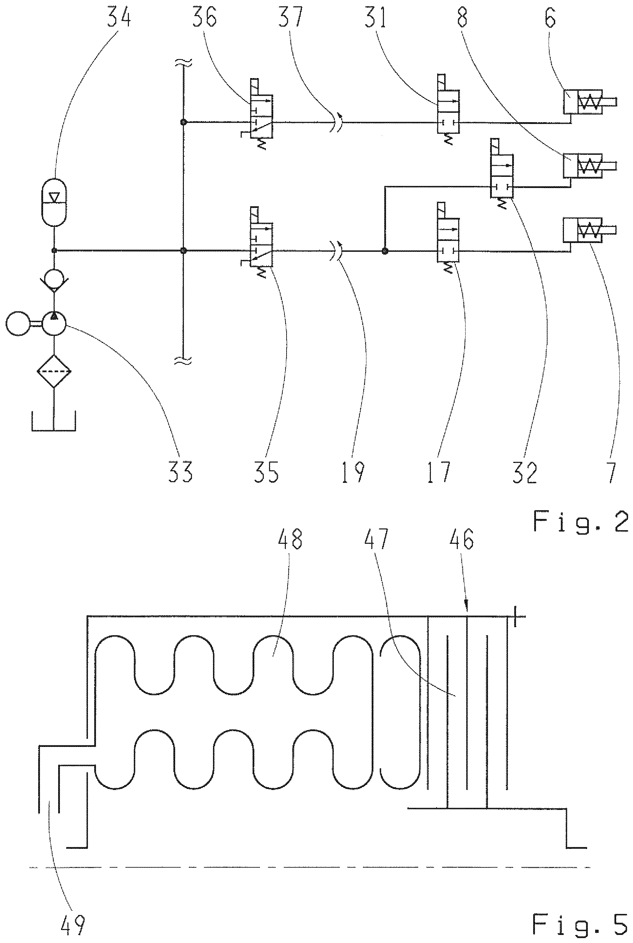

Erfindungsgemäß ist in dem Funktionsträger 2, welcher zwei miteinander verbundene Körper 2a, 2b umfasst, ein Absperrventil 17 angeordnet, welches die Druckölzufuhr zum Druckraum 7a der Schalteinrichtung 7 kontrolliert. Zwischen einem schematisch dargestellten Getriebegehäuse 18 und der Getriebewelle 1 ist eine so genannte Drehölzuführung 19, auch Drehübertrager genannt, vorgesehen, d. h. das Drucköl wird von einem gehäusefesten Kanal 20 in eine Ringnut 21 in der Getriebewelle 1 übergeben. Von dort gelangt das Drucköl über eine Radialbohrung 22, eine Axialbohrung 23 und eine weitere Radialbohrung 24 in einen Ölkanal 25 des Funktionsträgers 2 und von dort in das Absperrventil 17. Vom Absperrventil 17 führt ein Druckölkanal 26 in den Druckraum 7a. Die Druckölzufuhr zu den weiteren Druckräumen 6a, 8a der Schalteinrichtungen 6, 8 ist teilweise gestrichelt dargestellt - die zugehörigen Absperrventile sind in dieser Schnittdarstellung nicht sichtbar, da sie in Umfangsrichtung versetzt angeordnet sind. Grundsätzlich ist jede Schalteinrichtung 6, 7, 8 mit einem Absperrventil ausgestattet - wie auch unten stehend aus der Erläuterung von Fig. 2 hervorgeht.

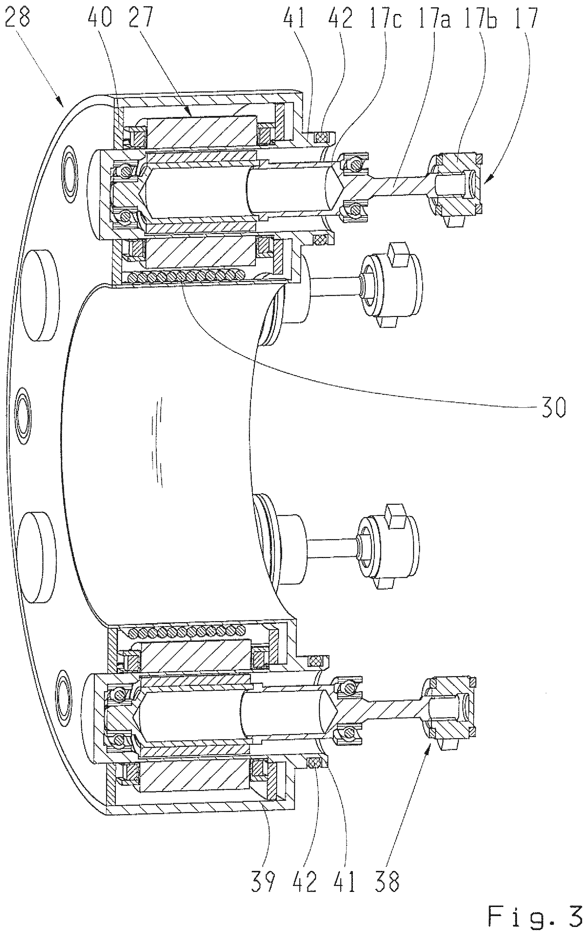

Das Absperrventil 17 wird elektrisch betätigt, im dargestellten Ausführungsbeispiel durch einen Elektromotor 27, der in einem ringförmig ausgebildeten elektronischen Steuergerät 28, auch Elektronikmodul 28 genannt, angeordnet ist. Das Absperrventil 17 in Verbindung mit dem Elektromotor 27 bildet einen Aktuator, auch Aktor genannt. Das Absperrventil 17 weist eine Drehspindel 17a und ein mit ihr über ein Bewegungsgewinde verbundenes Ventilschließglied 17b auf. Die Drehspindel 17a ist mit einer Hohlwelle 17c verbunden, auf welcher ein nicht mit einer Bezugszahl versehener Anker des Elektromotors 27 angeordnet ist. Die beweglichen Teile des Aktuators wie die Drehspindel 17a sowie die Hohlwelle 17c, die parallel zur Rotationsachse a angeordnet sind, unterliegen bei rotierendem Funktionsträger 2 einer Fliehkraftwirkung und sind daher schwimmend im Drucköl angeordnet, wodurch eine der Fliehkraft entgegen gerichtete Auftriebskraft erzeugt wird. Durch die Ausbildung der beweglichen Ventilkomponenten hinsichtlich Form und Werkstoff kann die Fliehkraft kompensiert werden. Das Elektronikmodul 28, insbesondere der Elektromotor 27 erhält seine elektrische Energie sowie seine Signale zum Schließen und Öffnen des Absperrventils 17 auf induktiver Basis: hierzu sind einerseits eine gehäuseseitige, d. h. ortsfeste Primärspule 29 und andererseits eine im rotierenden Elektronikmodul 28 angeordnete Sekundärspule 30 vorgesehen. Weitere Einzelheiten des Elektronikmoduls 28 werden im Zusammenhang mit der Beschreibung von Fig. 3 erläutert.

Die Betätigungseinrichtung weist vorzugsweise einen Kraftspeicher auf, welcher im Kraftfluss zwischen Aktuator bzw. Absperrventil 17 und Schaltelement 4 (und ebenso zwischen weiteren Aktuatoren und Schaltelementen) angeordnet ist und als Energiereserve bei nachlassender Anpresskraft im Lamellenpaket wirkt. Bevorzugt kann der Kraftspeicher als elastisches Glied, z. B. als Tellerfeder ausgebildet sein, wobei die Tellerfeder auch in den Ringkolben 14 integriert sein kann.

Fig. 2 zeigt einen Ausschnitt aus einem Hydraulikschaltplan für die Schalteinrichtungen 6, 7, 8 gemäß Fig. 1, welche den Schaltelementen 3, 5, 7 gemäß Fig. 1 zugeordnet sind. Der Schalteinrichtung, d. h. der Kolben/Zylinder-Einheit 7 ist das Absperrventil 17 gemäß Fig. 1 zugeordnet. Den Schalteinrichtungen 6, 8 sind jeweils Absperrventile 31, 32 zugeordnet. Mit der Bezugszahl 19 ist entsprechend Fig. 1 eine Drehölzuführung (auch Drehübertrager genannt) bezeichnet, d. h. die Ölübergabe vom Gehäuse in die rotierende Getriebewelle. Eine elektromotorisch intermittierend angetriebene Getriebeölpumpe 33, kurz Pumpe 33 genannt, fördert Drucköl in einen Druckspeicher 34, von dem aus das Drucköl über Druckregelventile 35, 36 dem Drehölübertrager 19 und einem weiteren Drehölübertrager 37 zugeführt wird. Während die Schalteinrichtung 6 über eine eigene Drehölzuführung 37 versorgt wird, sind die beiden Schalteinrichtungen 7, 8 hinter dem Drehölübertrager 19 parallel geschaltet, d. h. sie weisen einen gemeinsamen Drehölübertrager 19 auf - dadurch kann ein weiterer mit Verlusten behafteter Drehölübertrager eingespart werden. Jede Schalteinrichtung 6, 7, 8 wird somit durch ein eigenes Absperrventil 31, 17, 32 kontrolliert, sodass der Schließdruck im Druckraum bei geschlossener Kupplung aufrechterhalten werden kann, ohne dass der Druckspeicher 34 angezapft werden oder die Pumpe 33 Leistung abgeben muss.

Die Drehölübertrager 19, 37 werden bei geschlossenen Druckregelventilen mit Schmieröldruck beaufschlagt, damit diese keine Luftblasen ansaugen. Der Schmieröldruck in Höhe von ca. 1,5 bar ist im Getriebe vorhanden.

Fig. 3 zeigt das Elektronikmodul 28 als separate Baueinheit in perspektivischer Darstellung, wobei zwei Absperrventile, das in Fig. 1 dargestellte Absperrventil 17 sowie ein weiteres identisches Absperrventil 38, im Schnitt dargestellt sind. Das Elektronikmodul 28 weist ein ringförmig ausgebildetes Gehäuse 39 auf, welches durch einen Deckel 40 nach außen abgeschlossen ist. Innerhalb des Gehäuses 39 ist der Stator des Elektromotors 27 angeordnet (es werden gleiche Bezugszahlen wie in Fig. 1 für gleiche Teile verwendet). Am Gehäuse 39 sind Anschlussstutzen 41 angeformt, über welche das Elektronikmodul 28 mit dem Körper 2a des Funktionsträgers 2 (vgl. Fig. 1) verbunden wird. Gleichzeitig erfolgt eine Abdichtung des Gehäuses 39 gegenüber dem Ölraum im Körper 2a des Funktionsträgers 2 durch O-Ringe 42. In der Zeichnung sind vier Absperrventile, zwei mit den Bezugszahlen 17, 38 und zwei weitere ohne Bezugszahlen erkennbar. Insgesamt können also sechs Absperrventile auf dem Umfang des Elektronikmoduls 28 angeordnet werden. Wie bereits oben ausgeführt, laufen die Drehspindel 17a und die Hohlwelle 17c in Öl: sie unterliegen einerseits einer Fliehkraftwirkung und erfahren andererseits einen Auftrieb, welcher durch das Gewicht der verdrängten Ölmenge bestimmt wird. Um einen möglichst großen Auftrieb zu erreichen, ist die Ankerwelle 17c hohl ausgebildet. Zusätzlich werden bevorzugt Werkstoffe mit geringem spezifischem Gewicht verwendet, um die Fliehkraftwirkung gering zu halten. Wie aus der Zeichnung ersichtlich, ist die Hohlwelle 17c zweifach gelagert. Anstelle des Elektromotors 27 zur Erzeugung einer Drehbewegung kann auch ein Magnet in Verbindung mit einem Ventilstößel, nach Art eines Magnetventils verwendet werden. Die translatorische Bewegung des Ventilstößels wird dann direkt auf das Schließglied übertragen. Wie bereits oben erwähnt, erfolgt die Übertragung von elektrischer Energie auf induktiver Basis: hierfür ist innerhalb des Elektronikmoduls 28 im radial innen liegenden Bereich eine Sekundärwicklung 30 angeordnet, welche mit der hier nicht dargestellten Primärwicklung (vgl. Fig. 1) in Wirkverbindung steht.

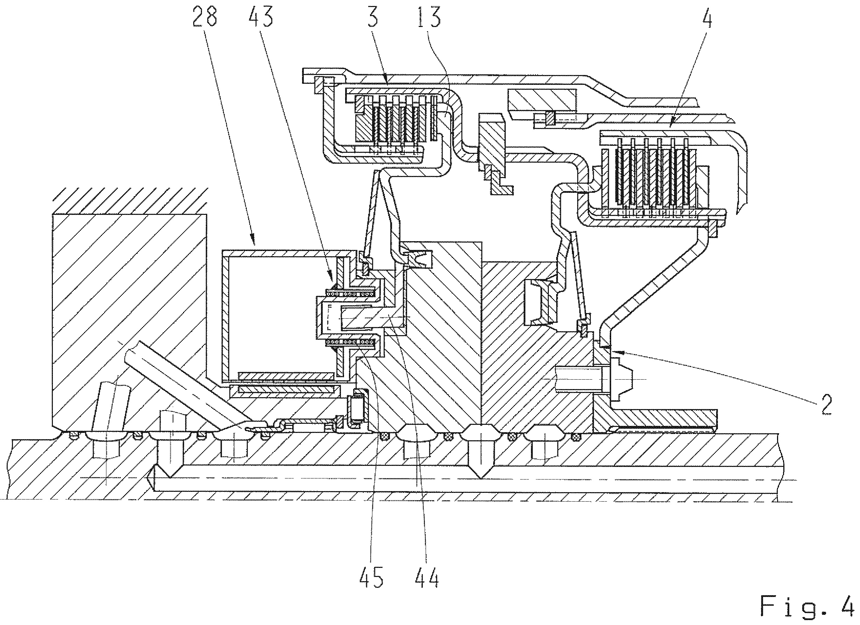

Fig. 4 zeigt einen weiteren Axialschnitt durch den Funktionsträger 2 und die Schaltelemente 3, 4 (es werden für gleiche Teile gleiche Bezugszahlen wie in Fig. 1 verwendet). Am Elektronikmodul 28 ist eine berührungslose Wegmesseinrichtung 43 angeordnet, welche beispielsweise nach der Methode eines Differenzialtransformators arbeitet. Die Wegmesseinrichtung 43 umfasst einen am Ringkolben 13 des Schaltelementes 3 befestigten Geberzapfen 44 und ein am Elektronikmodul 28 angeordnetes, napfartig ausgebildetes Nehmerteil 45, in welches der Geberzapfen 44 eintaucht. Es können mehrere solcher Wegmesseinrichtungen auf dem Umfang des Elektronikmoduls 28 angeordnet werden.

Darüber hinaus können - was nicht dargestellt ist - zusätzlich Druck- und/ oder Kraftsensoren vorgesehen werden, deren Signale von der elektronischen Steuereinrichtung 28 aufgenommen werden.

Fig. 5 zeigt als weiteres Ausführungsbeispiel der Erfindung ein Schaltelement 46 mit einem Lamellenpaket 47, welches durch einen Faltenbalg 48 den für eine Drehmomentübertragung erforderlichen Anpressdruck erhält. Das Innere des Faltenbalgs 48, der sich einerseits am Lamellenpaket 47 und andererseits am Gehäuse des Schaltelements 46 abstützt, wird über eine Zuführleitung 49 mit einem Druckmedium, Drucköl- oder Druckluft, befüllt. Im Bereich der Zuführleitung 49 ist - was nicht dargestellt ist - ein erfindungsgemäßes Absperrventil angeordnet, welches bei geschlossener Kupplung den Schließdruck im Faltenbalg 48 aufrechterhält und damit für die Übertragung eines konstanten Drehmoments sorgt. Vorteilhaft bei dem Faltenbalg ist, dass keine Dichtelemente in Form von Kolbenringen oder O-Ringen erforderlich sind und dass keine Leckage auftritt. Darüber hinaus kann der Faltenbalg 48 direkt im Schaltelement 46 untergebracht werden, wodurch ein Ringkolben und ein Druckraum im Funktionsträger 2 (vgl. Fig. 1) entfallen.

Wie oben erwähnt, ist der Funktionsträger als Multifunktionsträger ausgebildet und kann somit noch weitere Funktionen übernehmen, z. B. die Aufnahme von Kühl- und Schmierölventilen zur Steuerung eines Kühlölstromes für die Lamellenschaltelemente, die somit bedarfsgerecht gekühlt werden können.

### Bezugszeichen

- 1: Getriebewelle
- 2: Funktionsträger
- 2a: Körper
- 2b: Körper
- 3: erstes Schaltelement
- 3a: Innenlamellenträger
- 4: zweites Schaltelement
- 4a: Außenlamellenträger
- 5: drittes Schaltelement
- 6: Schalteinrichtung
- 6a: Druckraum
- 7: Schalteinrichtung
- 7a: Druckraum
- 8: Schalteinrichtung
- 8a: Druckraum
- 9: Lamellen/Klauen-Träger
- 9a: Außenlamellenträger
- 9b: Innenlamellenträger
- 9c: Klauenträger
- 10: Abtriebsglied
- 11: Abtriebsglied
- 12: Abtriebsglied
- 13: erster Ringkolben
- 14: zweiter Ringkolben
- 15: Schaltarm
- 16: Verbindungselement
- 17: Absperrventil
- 17a: Drehspindel
- 17b: Schließglied
- 17c: Hohlwelle
- 18: Getriebegehäuse
- 19: Drehölzuführung
- 20: Ölkanal
- 21: Ringnut
- 22: Radialbohrung
- 23: Axialbohrung
- 24: Radialbohrung
- 25: Ölkanal
- 26: Ölkanal
- 27: Elektromotor
- 28: Elektronikmodul
- 29: Primärspule
- 30: Sekundärspule
- 31: Absperrventil
- 32: Absperrventil
- 33: Hydraulikpumpe
- 34: Druckölspeicher
- 35: Druckregelventil
- 36: Druckregelventil
- 37: Drehölübertrager
- 38: Absperrventil
- 39: Gehäuse (Elektronikmodul)
- 40: Deckel
- 41: Anschlussstutzen
- 42: O-Ringe
- 43: Wegmesseinrichtung
- 44: Weggeber (Geberzapfen)
- 45: Nehmer
- 46: Schaltelement
- 47: Lamellenpaket
- 48: Faltenbalg
- 49: Druckleitung
- a: Rotationsachse

## Patentansprüche

1. Betätigungseinrichtung mit einer Schalteinrichtung (6, 7, 8, 48) und zumindest einem Schaltelement (3, 4, 5), zum Betätigen von zumindest des über die Schalteinrichtung (6, 7, 8; 48) schaltbaren Schaltelements (3, 4, 5), wobei die Schalteinrichtung (6, 7, 8; 48) einen Druckraum (6a, 7a, 8a) mit einer Zuführung (26; 49) für ein Druckmedium sowie ein Absperrventil (17) aufweist und das Absperrventil (17) elektrisch ansteuerbar und drehfest mit dem mindestens einen Schaltelement (3, 4, 5) verbunden und die elektrische Energie zur Betätigung des Absperrventils (17) berührungslos zuführbar ist, **dadurch gekennzeichnet, dass** mit dem mindestens einen Schaltelement (3, 4, 5) ein elektronisches Steuergerät (28) verbunden ist und das mindestens eine Schaltelement (3, 4, 5) und das elektronische Steuergerät (28) mittels eines Funktionsträgers (2) drehfest mit einer Getriebewelle (1) verbunden sind.

2. Betätigungseinrichtung nach Anspruch 1, **dadurch gekennzeichnet, dass** die Schalteinrichtung (6, 7, 8) hydraulisch betätigbar ist.

3. Betätigungseinrichtung nach Anspruch 1, **dadurch gekennzeichnet, dass** die Schalteinrichtung (48) pneumatisch betätigbar ist.

4. Betätigungseinrichtung nach Anspruch 2 oder 3, **dadurch gekennzeichnet, dass** die Schalteinrichtung als Faltenbalg (48) ausgebildet ist.

5. Betätigungseinrichtung nach Anspruch 2 oder 3, **dadurch gekennzeichnet, dass** die Schalteinrichtung als Kolben/ Zylinder-Einheit (6, 7, 8) ausgebildet ist.

6. Betätigungseinrichtung nach Anspruch 5, **dadurch gekennzeichnet, dass** der Kolben als Ringkolben (13, 14, 15) ausgebildet ist.

7. Betätigungseinrichtung nach einem der Ansprüche 1 bis 6, **dadurch gekennzeichnet, dass** das Absperrventil (17) Teil eines Aktuators ist und der Aktuator einen Elektromotor (27) und eine Ventilspindel (17a) umfasst.

8. Betätigungseinrichtung nach einem der Ansprüche 1 bis 6, **dadurch gekennzeichnet, dass** das Absperrventil (17) Teil eines Aktuators und als Magnetventil ausgebildet ist.

9. Betätigungseinrichtung nach einem der vorhergehenden Ansprüche, **dadurch gekennzeichnet, dass** in dem elektronischen Steuergerät (28) Teile (27) der Aktuatoren aufnehmbar sind.

10. Betätigungseinrichtung nach einem der Ansprüche 7 bis 9 , **dadurch gekennzeichnet, dass** bewegliche Teile (17a, 17b, 17c) des Aktuators in einem drehfest mit dem mindestens einen Schaltelement (3, 4, 5) verbundenen Funktionsträger (2) aufgenommen und in einer Hydraulikflüssigkeit schwimmend angeordnet sind.

11. Betätigungseinrichtung nach Anspruch 10, **dadurch gekennzeichnet, dass** die mittlere Dichte der beweglichen Teile (17a, 17b, 17c) des Aktuators durch geeignete Werkstoffauswahl und/oder geometrische Gestaltung der Dichte der Hydraulikflüssigkeit angenähert ist.

12. Betätigungseinrichtung nach einem der vorhergehenden Ansprüche, **dadurch gekennzeichnet, dass** im Kraftfluss zwischen Aktuator und Schaltelement (3, 4, 5) ein elastisches Glied als Kraftspeicher angeordnet ist.

13. Betätigungseinrichtung nach einem der vorhergehenden Ansprüche, **dadurch gekennzeichnet, dass** dem Absperrventil (17) und der zugeordneten Schalteinrichtung (7) Fluid über einen Drehübertrager (19) zuführbar ist und dass mindestens eine weitere Schalteinrichtung (8) respektive das zugeordnete Absperrventil (32) an denselben Drehübertrager (19) anschließbar sind.

14. Betätigungseinrichtung nach Anspruch 13, **dadurch gekennzeichnet, dass** dem Drehübertrager (19) Hydraulikflüssigkeit mit einem Druckniveau, welches einem Schmierdruckniveau entspricht, zuführbar ist.

15. Betätigungseinrichtung nach einem der Ansprüche 1 bis 14, **dadurch gekennzeichnet, dass** das elektronische Steuergerät (28) eine berührungslose Wegmesseinrichtung (43) mit einem Weggeber (44) und einem Nehmer (45) aufweist.

16. Betätigungseinrichtung nach Anspruch 15, **dadurch gekennzeichnet, dass** der Weggeber (44) am Ringkolben (13) des Schaltelementes (3) befestigt ist.

17. Betätigungseinrichtung nach einem der vorhergehenden Ansprüche, **dadurch gekennzeichnet, dass** der mindestens einen Schalteinrichtung (6, 7, 8) ein Drucksensor zur Erfassung des Schaltdruckes zugeordnet ist.

18. Betätigungseinrichtung nach einem der vorhergehenden Ansprüche, **dadurch gekennzeichnet, dass** die Hydraulikflüssigkeit zur Betätigung der Schaltelemente (3, 4, 5) über einen Druckspeicher (34), der von einer intermittierend fördernder Elektropumpe (33) füllbar ist, bereitgestellt wird.

19. Verwendung einer Betätigungseinrichtung zum Betätigen von zumindest einem über eine Schalteinrichtung (6, 7, 8; 48) schaltbaren Schaltelement (3, 4, 5) nach einem der vorhergehenden Ansprüche in einem Getriebe für Kraftfahrzeuge.

## Claims

1. Actuating device having a shifting device (6, 7, 8, 48) and at least the shifting element (3, 4, 5), for actuating at least one shifting element (3, 4, 5) which can be shifted via the shifting device (6, 7, 8; 48), the shifting device (6, 7, 8; 48) having a pressure space (6a, 7a, 8a), with a feed line (26; 49) for a pressure medium, and a shut-off valve (17), and the shut-off valve (17) being electrically actuable and being connected fixedly to the at least one shifting element (3, 4, 5) so as to rotate with it, and it being possible for the electric energy for actuating the shut-off valve (17) to be supplied contactlessly, **characterized in that** an electronic control unit (28) is connected to the at least one shifting element (3, 4, 5), and the at least one shifting element (3, 4, 5) and the electronic control unit (28) are connected by means of a function carrier (2) to a transmission shaft (1) fixedly so as to rotate with it.

2. Actuating device according to Claim 1, **characterized in that** the shifting device (6, 7, 8) can be actuated hydraulically.

3. Actuating device according to Claim 1, **characterized in that** the shifting device (48) can be actuated pneumatically.

4. Actuating device according to Claim 2 or 3, **characterized in that** the shifting device is configured as a folding bellows (48).

5. Actuating device according to Claim 2 or 3, **characterized in that** the shifting device is configured as a piston/cylinder unit (6, 7, 8).

6. Actuating device according to Claim 5, **characterized in that** the piston is configured as an annular piston (13, 14, 15).

7. Actuating device according to one of Claims 1 to 6, **characterized in that** the shut-off valve (17) is part of an actuator, and the actuator comprises an electric motor (27) and a valve spindle (17a).

8. Actuating device according to one of Claims 1 to 6, **characterized in that** the shut-off valve (17) is part of an actuator and is configured as a solenoid valve.

9. Actuating device according to one of the preceding claims, **characterized in that** parts (27) of the actuators can be received in the electronic control unit (28).

10. Actuating device according to one of Claims 7 to 9, **characterized in that** movable parts (17a, 17b, 17c) of the actuator are received in a function carrier (2) which is connected fixedly to the at least one shifting element (3, 4, 5) so as to rotate with it, and are arranged so as to float in a hydraulic fluid.

11. Actuating device according to Claim 10, **characterized in that** the mean density of the movable parts (17a, 17b, 17c) of the actuator is approximated to the density of the hydraulic fluid by way of a suitable material selection and/or geometrical design.

12. Actuating device according to one of the preceding claims, **characterized in that** an elastic member is arranged as a force accumulator in the force flow between the actuator and the shifting element (3, 4, 5).

13. Actuating device according to one of the preceding claims, **characterized in that** fluid can be fed via a rotary connector (19) to the shut-off valve (17) and the assigned shifting device (7), and **in that** at least one further shifting device (8) and the associated shut-off valve (32), respectively, can be connected to the same rotary connector (19).

14. Actuating device according to Claim 13, **characterized in that** hydraulic fluid can be fed to the rotary connector (19) at a pressure level which corresponds to a lubricating pressure level.

15. Actuating device according to one of Claims 1 to 14, **characterized in that** the electronic control unit (28) has a contactless displacement measuring device (43) with a displacement transducer (44) and a sensor (45).

16. Actuating device according to Claim 15, **characterized in that** the displacement transducer (44) is fastened to the annular piston (13) of the shifting element (3).

17. Actuating device according to one of the preceding claims, **characterized in that** the at least one shifting device (6, 7, 8) is assigned a pressure sensor for detecting the shifting pressure.

18. Actuating device according to one of the preceding claims, **characterized in that** the hydraulic fluid for actuating the shifting elements (3, 4, 5) is provided via a pressure accumulator (34) which can be filled by an intermittently delivering electric pump (33).

19. Use of an actuating device for actuating at least one shifting element (3, 4, 5) according to one of the preceding claims which can be shifted via a shifting device (6, 7, 8; 48), in a transmission for motor vehicles.

## Revendications

1. Dispositif d'actionnement comprenant un dispositif de commutation (6, 7, 8, 48) et au moins un élément de commutation (3, 4, 5) pour l'actionnement d'au moins l'élément de commutation (3, 4, 5) pouvant être commuté par le biais du dispositif de commutation (6, 7, 8 ; 48), le dispositif de commutation (6, 7, 8 ; 48) présentant un espace de pression (6a, 7a, 8a) avec une alimentation (26 ; 49) pour un fluide sous pression ainsi qu'une soupape d'arrêt (17) et la soupape d'arrêt (17) pouvant être commandée électriquement et étant connectée de manière solidaire en rotation à l'au moins un élément de commutation (3, 4, 5) et l'énergie électrique pour l'actionnement de la soupape d'arrêt (17) pouvant être fournie sans contact, **caractérisé en ce qu'**un appareil de commande électronique (28) est connecté à l'au moins un élément de commutation (3, 4, 5) et l'au moins un élément de commutation (3, 4, 5) et l'appareil de commande électronique (28) sont connectés de manière solidaire en rotation à un arbre de transmission (1) au moyen d'un support fonctionnel (2).

2. Dispositif d'actionnement selon la revendication 1, **caractérisé en ce que** le dispositif de commutation (6, 7, 8) peut être actionné hydrauliquement.

3. Dispositif d'actionnement selon la revendication 1, **caractérisé en ce que** le dispositif de commutation (48) peut être actionné pneumatiquement.

4. Dispositif d'actionnement selon la revendication 2 ou 3, **caractérisé en ce que** le dispositif de commutation est réalisé sous forme de soufflet (48).

5. Dispositif d'actionnement selon la revendication 2 ou 3, **caractérisé en ce que** le dispositif de commutation est réalisé sous forme d'unité cylindre-piston (6, 7, 8).

6. Dispositif d'actionnement selon la revendication 5, **caractérisé en ce que** le piston est réalisé sous forme de piston annulaire (13, 14, 15).

7. Dispositif d'actionnement selon l'une quelconque des revendications 1 à 6, **caractérisé en ce que** la soupape d'arrêt (17) fait partie d'un actionneur et l'actionneur comprend un moteur électrique (27) et une broche de soupape (17a).

8. Dispositif d'actionnement selon l'une quelconque des revendications 1 à 6, **caractérisé en ce que** la soupape d'arrêt (17) fait partie d'un actionneur et est réalisée sous forme d'électrovanne.

9. Dispositif d'actionnement selon l'une quelconque des revendications précédentes, **caractérisé en ce que** des parties (27) des actionneurs peuvent être reçues dans l'appareil de commande électronique (28).

10. Dispositif d'actionnement selon l'une quelconque des revendications 7 à 9, **caractérisé en ce que** des parties mobiles (17a, 17b, 17c) de l'actionneur sont reçues dans un support fonctionnel (2) connecté de manière solidaire en rotation à l'au moins un élément de commutation (3, 4, 5) et sont disposées de manière flottante dans un liquide hydraulique.

11. Dispositif d'actionnement selon la revendication 10, **caractérisé en ce que** la densité moyenne des parties mobiles (17a, 17b, 17c) de l'actionneur est approchée de la densité du liquide hydraulique par un choix adéquat des matériaux et/ou une configuration géométrique adéquate.

12. Dispositif d'actionnement selon l'une quelconque des revendications précédentes, **caractérisé en ce qu'**un organe élastique est disposé dans le flux de forces entre l'actionneur et l'élément de commutation (3, 4, 5) en tant qu'accumulateur de force.

13. Dispositif d'actionnement selon l'une quelconque des revendications précédentes, **caractérisé en ce que** du fluide peut être acheminé par le biais d'un dispositif de transfert rotatif (19) à la soupape d'arrêt (17) et au dispositif de commutation associé (7), et **en ce qu'**au moins un dispositif de commutation supplémentaire (8), respectivement la soupape d'arrêt associée (32), peuvent être raccordés au même dispositif de transfert rotatif (19).

14. Dispositif d'actionnement selon la revendication 13, **caractérisé en ce que** du liquide hydraulique peut être acheminé au dispositif de transfert rotatif (19) à un niveau de pression qui correspond à un niveau de pression de lubrification.

15. Dispositif d'actionnement selon l'une quelconque des revendications 1 à 14, **caractérisé en ce que** l'appareil de commande électronique (28) présente un dispositif de mesure de course sans contact (43) avec un détecteur de course (44) et un récepteur (45).

16. Dispositif d'actionnement selon la revendication 15, **caractérisé en ce que** le détecteur de course (44) est fixé sur le piston annulaire (13) de l'élément de commutation (3).

17. Dispositif d'actionnement selon l'une quelconque des revendications précédentes, **caractérisé en ce qu'**un capteur de pression pour détecter la pression de commutation est associé à l'au moins un dispositif de commutation (6, 7, 8).

18. Dispositif d'actionnement selon l'une quelconque des revendications précédentes, **caractérisé en ce que** le liquide hydraulique pour l'actionnement des éléments de commutation (3, 4, 5) est fourni par le biais d'un accumulateur de pression (34) qui peut être rempli par une pompe électrique (33) refoulant de manière intermittente.

19. Utilisation d'un dispositif d'actionnement pour l'actionnement d'au moins un élément de commutation (3, 4, 5) pouvant être commuté par le biais d'un dispositif de commutation (6, 7, 8 ; 48) selon l'une quelconque des revendications précédentes dans une transmission de véhicule automobile.
